# EUROPÄISCHE PATENTANMELDUNG

(11) **EP 4 390 088 A1**
(43) Veröffentlichungstag der Anmeldung: **26.06.2024**
(21) Anmeldenummer: 23210500.7
(22) Anmeldetag: 17.11.2023
(51) Int. Cl.: F02C 3/30, F02C 6/18, F02C 9/28

(54) **VERFAHREN ZUM BETREIBEN EINER STRÖMUNGSMASCHINE FÜR EINEN FLUGANTRIEB**

(30) Priorität: 21.12.2022 DE 102022134425; 17.05.2023 DE 102023113117
(71) Anmelder: MTU Aero Engines AG, 80995 München (DE)
(72) Erfinder: Kaiser, Sascha, 80995 München (DE); Klingels, Hermann, 80995 München (DE); Ziegler, Paul, 80995 München (DE)

(57) **Zusammenfassung**

Die Erfindung betrifft ein Verfahren (100) zum Betreiben einer Strömungsmaschine (10) für einen Flugantrieb mit von einer Gasströmung (S) in einer Strömungsrichtung durchströmten Verdichter (13), Brennraum (14), Turbine (15) und einer der Turbine (15) nachgelagerten Wärmetauscheinrichtung (18), wobei die Wärmetauscheinrichtung (18) aus der Gasströmung (S) Wasser gewinnt, welches zum Verbrennen von Brennstoff im Brennraum (14) zugeführt wird.

## Beschreibung

Die Erfindung betrifft ein Verfahren zum Betreiben einer Strömungsmaschine für einen Flugantrieb mit von einer Gasströmung in einer Strömungsrichtung durchströmten Verdichter, Brennraum, Turbine und einer der Turbine nachgelagerten Wärmetauscheinrichtung, wobei die Wärmetauscheinrichtung aus der Gasströmung Wasser gewinnt, welches zum Verbrennen von Brennstoff im Brennraum zugeführt wird.

Um Auswirkungen des Luftverkehrs auf das Klima zu verringern, bestehen Bestrebungen die wichtigsten klimarelevanten Emissionen zu reduzieren. Neben den bekannten Auswirkungen der Kohlendioxid-Emissionen, tragen auch Nicht-CO2-Effekte zu den Klimaauswirkungen des Luftverkehrs bei. Nicht-CO2-Effekte können beispielsweise Stickoxidemissionen und Zirruswolken im Kondensstreifen sein. Ein vielversprechendes Konzept auf der Basis von Gasturbinen, das alle diese Emissionen berücksichtigt, ist der Water-Enhanced Turbofan (WET).

Im Gegensatz zu konventionellen Turbofans wird beim WET-Konzept Wasser in die Brennkammer eingespritzt, wodurch eine deutliche Reduzierung der Stickoxidemissionen erreicht werden kann. Hierbei wird, nachdem ein Arbeitsmedium der Strömungsmaschine durch die Turbinen expandiert ist, eine Abgaswärme mit Hilfe eines Wärmerückgewinnungs-Dampferzeugungs-Prozess wenigstens teilweise zurückgewonnen. Zur Verflüssigung und Rückgewinnung des im Arbeitsmedium enthaltenen Wassers wird typischerweise ein Kondensator mit einem Wasserabscheider eingesetzt. Bei der Kondensation bilden sich Tröpfchen um im Abgas vorhandenen Feinstaub, wobei diese Partikel im anschließenden Wasserabscheider ausgewaschen werden können, wodurch die Feinstaub-Emissionen in der Abgasfahne und damit auch Klimaauswirkungen von Kondensstreifen reduziert werden können.

Hiervon ausgehend ist es eine Aufgabe der vorliegenden Erfindung, ein verbessertes Verfahren zum Betreiben einer Strömungsmaschine für einen Flugantrieb vorzuschlagen, mittels welchem insbesondere ein verbesserter thermischer Wirkungsgrad für die Strömungsmaschine erzielbar ist. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Verfahren zum Betreiben einer Strömungsmaschine für einen Flugantrieb mit von einer Gasströmung in einer Strömungsrichtung durchströmten Verdichter, Brennraum, Turbine und einer der Turbine nachgelagerten Wärmetauscheinrichtung vorgeschlagen, wobei mittels der Wärmetauscheinrichtung aus der Gasströmung Wasser gewonnen wird, welches zum Verbrennen von Brennstoff im Brennraum zugeführt wird. Dabei ergibt sich am Austritt aus der Brennkammer bzw. stromab der Brennkammer ein Wasserdampf-Gasströmungsverhältnis für die Gasströmung. Dieses Wasserdampf-Gasströmungs-Verhältnis wird in Abhängigkeit eines Betriebsmodus der Strömungsmaschine eingestellt.

Mittels des vorgeschlagenen Verfahrens kann über das Wasserdampf-Gasströmungs-Verhältnis eine Turbineneintrittstemperatur der Gasströmung für verschiedene Betriebsmodi beeinflusst werden, insbesondere derart, dass die Turbineneintrittstemperatur für die jeweiligen verschiedenen Betriebsmodi eingestellt, verändert bzw. angepasst werden kann. Da beispielsweise für einen Start oder Steigflug eines Fluges eines Flugzeugs mehr Leistung von der Strömungsmaschine erzeugt bzw. bereitgestellt werden muss als in einem Reiseflugbetrieb, kann insbesondere für diese Betriebsfälle die Temperatur der Gasströmung am Turbineneintritt einen begrenzenden Faktor für die Auslegung der Strömungsmaschine im Reiseflugbetrieb darstellen. Durch das vorgeschlagene Einstellen des Wasserdampf-Gasströmungs-Verhältnisses kann die Turbineneintrittstemperatur für die verschiedenen Betriebsmodi beeinflusst werden, sodass die Turbineneintrittstemperatur für einen Reiseflug bzw. Reiseflugmodus erhöht werden kann, ohne dass sich die Turbineneintrittstemperatur in anderen Betriebsmodi bzw. Betriebspunkten erhöhen muss. Durch die so ermöglichte Steigerung der Turbineneintrittstemperatur für einen Reiseflug bzw. Reiseflugmodus, kann ein thermischer Wirkungsgrad für den Reiseflug bzw. Reiseflugmodus der Strömungsmaschine bzw. einer Fluggasturbine gesteigert werden.

Gemäß eines weiteren Aspekts der Erfindung wird eine Strömungsmaschine für einen Flugantrieb vorgeschlagen, die zur Verwendung in einem hierin vorgeschlagenen Verfahren eingerichtet ist. Eine Strömungsmaschine ist insbesondere ein Flugtriebwerk und weist typischerweise einen Fan, einen Verdichter, eine Brennkammer und eine Turbine auf und kann beispielsweise als Mantelstromtriebwerk ausgebildet sein. Mittels des Fans kann Umgebungsluft als Arbeitsfluid bzw. Gasströmung angesaugt und zur, insbesondere in Strömungsrichtung fortschreitenden, Druckerhöhung in dem Verdichter komprimiert werden. In der in Strömungsrichtung des Triebwerks nach dem Verdichter angeordneten Brennkammer, kann das komprimierte Arbeitsfluid mit einem Brennstoff und Wasser, insbesondere Wasserdampf, welches/(r) mittels der Wärmetauscheinrichtung aus der Gasströmung gewonnen wird, verbrannt werden, um Verbrennungsgase mit hohem Druck und hoher Temperatur zu erzeugen. Die Verbrennungsgase strömen als Gasströmung von der Brennkammer zur Turbine, wo sie sich ausdehnen, um Arbeit zu verrichten. Insbesondere treibt die Expansion der Verbrennungsgase im Turbinenabschnitt eine Rotorwelle an. Hierbei kann beispielsweise eine Hochdruckturbine einen Hochdruckverdichter des Verdichters und eine Niederdruckturbine den Fan antreiben, wobei die Niederdruckturbine durch eine Dampfturbine unterstützt werden kann.

Im Anschluss an die Turbine wird die Gasströmung der Wärmetauscheinrichtung zugeführt, welche der Gasströmung Wärme und Wasser entziehen kann, insbesondere um dieses der Gasströmung entzogene Wasser im Bereich der Brennkammer, insbesondere vor der Brennkammer, der Gasströmung zum Verbrennen, zuzuführen. Der Wärmetauscher bzw. die Wärmetauscheinrichtung kann in Strömungsrichtung beispielsweise einen Verdampfer, einen Kondensator und einen Wasserabscheider aufweisen, durch welche die Gasströmung passiert. Hierbei kann die Gasströmung in dem Verdampfer vorgekühlt werden. Im Kondensator kann durch weiteres Abkühlen der Gasströmung darin enthaltenes Wasser kondensieren, wobei sich an in der (Ab-)Gasströmung enthaltenen Partikeln (Feinstaub) Kondensationskeime bilden können. Dabei kann die Wärmetauscheinrichtung so ausgelegt sein, dass das gesamte zur Verbrennung eingespritzte Wasser kondensiert und wieder zurückgewonnen werden kann.

In dem Wasserabscheider wird flüssiges Wasser von der Gasströmung getrennt, wobei die Kondensationskeime aus dem Abgas ausgespült werden können, was insbesondere auch die Bildung von Kondensstreifen verringert. Das derart gewonnene Wasser kann mittels einer Pumpe auf ein erhöhtes Druckniveau gebracht und dem Verdampfer zugeführt werden, wo das Wasser unter Nutzung der Wärme der Gasströmung in Wasserdampf umgewandelt werden kann. Bevor das verdampfte Wasser der Gasströmung zugeführt wird, kann es in der Dampfturbine entspannt werden, wobei die dabei abgegebene Leistung in eine Niederdruckwelle, insbesondere zum Antreiben des Fans, eingespeist werden kann. Durch das Zuführen des Wassers bzw. Wasserdampfs zu der Gasströmung bzw. dem Verbrennungsprozess, kann eine Effizienz der Strömungsmaschine erhöht und/ oder Stickoxidemissionen (NOx) reduziert werden.

Stromauf der Brennkammer bzw. nach dem Zuführen des Wassers zur Gasströmung ergibt sich, insbesondere für den Massenstrom der Gasströmung, das Wasserdampf-Gasströmungs-Verhältnis bzw. Wasserdampf-Luft-Verhältnis (*ṁ_{wasser}*/*ṁ_{Luft}*). Dieses Wasserdampf-Gasströmungs-Verhältnis gibt insbesondere die Wasserdampfmenge des zugeführten Wassers bezogen auf den Luftmassenstrom der Gasströmung insbesondere nach der Stelle des Zuführens und/ oder vor bzw. am Eintritt der Brennkammer an. Durch die physikalischen Eigenschaften von Wasser bzw. Wasserdampf im Vergleich zu der verdichteten Luft der Gasströmung, kann durch eine Steigerung der Wasserdampfmenge bezogen auf den Luftmassenstrom, eine vorbestimmte Turbinenleistung bei niedrigerer Turbineneintrittstemperatur der Gasströmung realisiert werden.

Die Erfindung beruht unter anderem auf der Erkenntnis, dass gegenüber konventionellen Turbofans, bei welchen ein Kraftstoffdurchsatz den einzigen Freiheitsgrad darstellt, beim WET-Konzept das Wasserdampf-Gasströmungs-Verhältnis eine zusätzliche Stellgröße für die Strömungsmaschine darstellt. Typischerweise treten am Eintritt der Gasströmung in die Turbine die höchsten thermischen Belastungen für die Strömungsmaschine auf. Eine Steigerung des thermischen Wirkungsgrades durch höhere Turbineneintrittstemperaturen, insbesondere im Reiseflug, ist bei bekannten bzw. konventionellen Fluggasturbinen bzw. Strömungsmaschinen, durch Turbineneintrittstemperaturen im Steigflug und Startfall, also in Betriebsmodi mit höheren Belastungen, begrenzt.

Um den thermischen Wirkungsgrad im Reiseflug einer Fluggasturbine durch eine Steigerung einer zulässigen Turbineneintrittstemperatur zu erhöhen und insbesondere ohne die Turbineneintrittstemperatur in anderen Betriebspunkten zu erhöhen, wird nunmehr vorgeschlagen, das Wasserdampf-Gasströmungs-Verhältnis in Abhängigkeit des Betriebsmodus und/ oder der von der Strömungsmaschine bereitzustellenden Leistung, einstellbar zu gestalten. Insgesamt kann mittels des vorgeschlagenen Verfahrens eine Steigerung des thermischen Wirkungsgrades durch höhere Turbineneintrittstemperaturen im Reiseflug erzielt werden, da die thermische Begrenzung bzw. mögliche Überbeanspruchung am Turbineneintritt im Steig- und/ oder Startmodus mittels der durch die Wasserzuführung ermöglichten Temperaturreduzierung für die Gasströmung, moderiert werden kann.

Bei einer Ausführungsform ist ein Betriebsmodus ein Startmodus, ein Steigflugmodus, ein Reiseflugschubmodus und/ oder ein Reiseflugmodus. Ein Betriebsmodus ist dabei insbesondere die Betriebsweise der Strömungsmaschine, welche für eine vorbestimmte Phase eines Flugbetriebs bzw. Fluges eines Flugzeugs angewandt wird, um eine vorbestimmte Leistung bzw. einen vorbestimmten Leistungsbereich für die jeweilige Phase eines Fluges bereitzustellen. Der Betriebsmodus ist dabei jeweils insbesondere durch die jeweiligen Betriebsbedingungen bzw. -zustände der Strömungsmaschine für die jeweilige Phase bzw. Betriebsmodus, wie beispielsweise eine typische bzw. flugzeugspezifische optimale Fluggeschwindigkeit bzw. FlugMachzahl und/ oder Flughöhe, (ISA-)Atmosphärenbedingungen und/ oder einen typischen bzw. flugzeugspezifischen optimalen (Netto-)Schub der Strömungsmaschine bzw. des Flugantriebs und/ oder Flugzeugs charakterisiert.

Ein Reiseflugmodus (Cruise) ist insbesondere eine Betriebsweise, in welcher die Strömungsmaschine für diejenige Flugphase betrieben wird, die beginnt, wenn sich das Flugzeug nach einem Steigflug stabilisiert, und die andauert, bis das Flugzeug beginnt, für eine Landung abzusinken. Ein Reiseflugschubmodus ist insbesondere eine Betriebsweise, bei welchem die Strömungsmaschine mit maximalem Schub auf Reiseflughöhe betrieben wird, beispielsweise am Ende des Steigfluges oder bei einer Änderung der Reiseflughöhe. Der Reiseflugmodus wird in der Regel für den größten Teil des Fluges angewendet, weswegen Verkehrs- und/ oder Passagierflugzeuge typischerweise für eine optimale Leistung im Reiseflug und/ oder insbesondere ihrer optimalen Reisegeschwindigkeit und Reiseflughöhe ausgelegt sind. Zu den Faktoren, die die optimale Reisegeschwindigkeit und Reiseflughöhe beeinflussen, gehören beispielsweise eine Nutzlast, ein Schwerpunkt des Flugzeugs, eine Lufttemperatur und eine Luftfeuchtigkeit. Die Reiseflughöhe ist insbesondere der Punkt, an dem eine höhere Geschwindigkeit über Grund gegen einen geringeren Schub und eine geringere Effizienz der Triebwerke in größeren Höhen aufgewogen wird. Die Machzahl einer typischen Reisefluggeschwindigkeit für ein Langstrecken-Passagierflugzeug beträgt etwa Ma = 0.6 - 0.9 und eine typische Reiseflughöhe für Verkehrsflugzeuge liegt bei etwa 25.000 bis 45.000 Fuß.

Ein Steigflugmodus ist insbesondere eine Betriebsweise, in welcher die Strömungsmaschine für diejenige Flugphase betrieben wird, bei dem eine Flughöhe eines Flugzeugs gegenüber dem Boden erhöht wird, wobei eine Höhenzunahme auf ein vorgegebenes Niveau bzw. die Reiseflughöhe erfolgt. Die Steigphase folgt insbesondere unmittelbar auf den Start (Takeoff) und geht der Reiseflugphase des Fluges voraus. Obwohl eine einzelne Steigflugphase typisch ist, können sich mehrere Steigflugphasen mit Reiseflugphasen abwechseln, insbesondere bei sehr langen Flügen, bei denen die Höhe erhöht wird, wenn das Gewicht des an Bord befindlichen Treibstoffs abnimmt. Mit fortschreitendem Steigflug kann eine Steiggeschwindigkeit abnehmen, da der Schub aufgrund der Verringerung der Luftdichte abnimmt.

Ein Startmodus ist insbesondere eine Betriebsweise, in welcher die Strömungsmaschine für diejenige Flugphase betrieben wird, in der das Flugzeug beschleunigt wird, den Boden verlässt und in die Luft geht. Bei Flugzeugen, die horizontal starten, beginnt dies normalerweise mit einer Bewegung am Boden. Im Startmodus kann eine volle und/ oder eine reduzierte Leistung der Strömungsmaschine genutzt werden, um die Lebensdauer des Triebwerks zu verlängern, die Wartungskosten zu senken und die Lärmemissionen zu verringern.

Bei dem vorgeschlagenen Verfahren kann also das Einstellen des Wasserdampf-Gasströmungs-Verhältnis gleichzeitig mit, als Folge von und/ oder kontinuierlich bzw. graduell mit einem Wechsel zwischen zwei verschiedenen Betriebsmodi erfolgen, um das Wasserdampf-Gasströmungs-Verhältnis auf geeignete Weise anzupassen und so eine Temperatur der Gasströmung, insbesondere an dem Eintritt der Turbine und/ oder hinter der eigentlichen Verbrennung, aber vor der Turbine, zu reduzieren.

Bei einer Ausführungsform wird das Wasserdampf-Gasströmungs-Verhältnis mittels einer Menge des der Gasströmung zugeführten Wassers eingestellt. Hierzu kann insbesondere im Bereich der Zuführung des Wassers zu der Gasströmung eine Stelleinrichtung vorgesehen sein, die eingerichtet ist, eine Menge bzw. einen Massenstrom des Wassers zu steuern bzw. einzustellen.

Bei einer Ausführungsform wird das Wasser der Gasströmung in Form von Wasserdampf zugeführt. Hierzu kann das Wasser beispielsweise in dem Verdampfer der Wärmetauscheinrichtung verdampft und/ insbesondere auf eine vorbestimmte Temperatur gebracht werden. Durch die physikalischen Eigenschaften von Wasserdampf im Vergleich zu der verdichteten Luft bzw. der Gasströmung, kann so eine Turbineneintrittstemperatur der Gasströmung bei gleichbleibender Leistung der Strömungsmaschine gesenkt werden.

Bei einer Ausführungsform ist das in dem Startmodus angewandte Wasserdampf-Gasströmungs-Verhältnis 101%-200%, insbesondere 140%-180%, besonders bevorzugt 150%-170% des im Reiseflugmodus angewandten Wasserdampf-Gasströmungs-Verhältnisses. Hierbei ist das in der Gasströmung vorhandene bzw. durch Zuführung von Wasser eingestellte Wasserdampf-Gasströmungs-Verhältnis gegenüber dem im Reiseflugmodus eingestellten Wasserdampf-Gasströmungs-Verhältnis um die jeweilige Quote bzw. Prozentzahl erhöht. Durch den derart gesteigerten Wasser- bzw. Wasserdampfanteil in der Gasströmung kann, insbesondere bei hoher Strömungsmaschinenleistung, die thermische Belastung durch die Gasströmung am Turbineneingang gesenkt werden.

Bei einer Ausführungsform ist das in dem Steigflugmodus angewandte Wasserdampf-Gasströmungs-Verhältnis 105%-180%, insbesondere 120%-170%, besonders bevorzugt 135%-150% des im Reiseflugmodus angewandten Wasserdampf-Gasströmungs-Verhältnisses. Hierdurch kann die Strömungsmaschinenleistung für den Steigflug erhöht werden, insbesondere ohne die Turbineneintrittstemperatur zu erhöhen. Insbesondere wird mittels des Wasserdampf-Gasströmungs-Verhältnisses für den Steigflugmodus bzw. für einen Betrieb der Strömungsmaschine im Steigflug die Turbineneintrittstemperatur derart angepasst, dass insbesondere eine zulässige Turbineneintrittstemperatur nicht überschritten wird.

Bei einer Ausführungsform ist das in dem Reiseflugschubmodus angewandte Wasserdampf-Gasströmungs-Verhältnis 101%-160%, insbesondere 110%-140%, besonders bevorzugt 115%-130% des im Reiseflugmodus angewandten Wasserdampf-Gasströmungs-Verhältnisses ist. Hierdurch kann die Strömungsmaschinenleistung für den Reiseflugschubmodus bzw. für einen Betrieb der Strömungsmaschine in dem maximalen Schub auf Reiseflughöhe in einer angepassten Weise erhöht werden, insbesondere ohne dass die Turbineneintrittstemperatur einen festgelegten Grenzwert übersteigt.

Bei einer Ausführungsform wird bei einem Betrieb im Steigflugmodus das angewandte Wasserdampf-Gasströmungs-Verhältnis in Abhängigkeit von einer Flughöhe, insbesondere proportional, gegenüber dem Startmodus im Wasserdampf-Gasströmungs-Verhältnis gesenkt bzw. niedriger eingestellt. Auf Reiseflughöhe ergibt sich für den Steigflugmodus das Wasserdampf-Gasströmungs-Verhältnis des Reiseflugschubmodus. Da für einen Steigflug die Strömungsmaschine eine größere Leistung bereitstellen muss als im Reiseflugbetrieb, weil derjenige Anteil des Schubs, um den der Schub des Triebwerks den Luftwiderstand des Flugzeugs übersteigt, genutzt wird, kann eine graduelle oder kontinuierliche Senkung des zugeführten Wasserdampfs erfolgen.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung einer beispielhaften erfindungsgemäßen Strömungsmaschine für einen Flugantrieb; und
- Fig. 2: eine schematische Darstellung eines Ablaufdiagramms eines erfindungsgemäßen Verfahrens zum Betreiben einer Strömungsmaschine für einen Flugantrieb.

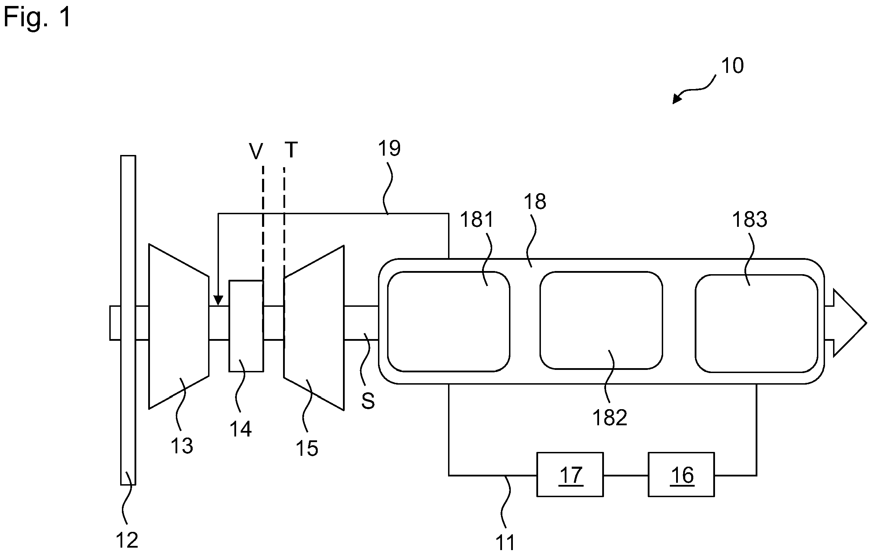

**Fig. 1** zeigt eine erfindungsgemäße Strömungsmaschine 10 für einen Flugantrieb, die eingerichtet ist, ein hierin beschriebenes Verfahren durchzuführen, in einer schematischen Darstellung.

Die Strömungsmaschine 10 kann beispielsweise als Mantelstromtriebwerk ausgebildet sein und weist einen Fan 12, einen Verdichter 13, einen Brennraum 14 und eine Turbine 15 auf, die von einer Gasströmung S in einer Strömungsrichtung (illustriert durch den rechts dargestellten Pfeil) durchströmbar sind bzw. in einem Betrieb der Strömungsmaschine 10 von der Gasströmung S durchströmt werden. Die Gasströmung S kann hierbei beispielsweise ein Kernstrom des Mantelstromtriebwerks sein. Insbesondere ist die Strömungsmaschine 10 eingerichtet, in verschiedenen Betriebsmodi, beispielsweise einem Startmodus, einem Steigflugmodus, einem Reiseflugschubmodus und/ oder einem Reiseflugmodus betrieben zu werden.

Der Turbine 15 in Strömungsrichtung nachgelagert weist die Strömungsmaschine 10 eine Wärmetauscheinrichtung 18 mit einem Verdampfer 181 auf, der eingerichtet ist die Gasströmung S zu kühlen und/ oder mittels einer Energie der Gasströmung S ein aus der Gasströmung S gewonnenes Wasser zu verdampfen bzw. einen Wasserdampf zu erzeugen. Dieser Wasserdampf kann über eine Dampfzuführung 19, insbesondere mit einem Brennstoff, der Gasströmung S zum Verbrennen im Brennraum 14, insbesondere mittels einer geeigneten Zuführeinrichtung, zugeführt werden. Mittels des der Gasströmung S zugeführten Wassers kann ein sich insbesondere in Strömungsrichtung am Austritt der Gasströmung aus der Brennkammer bzw. vor der Turbine resultierendes Wasserdampf-Gasströmungs-Verhältnis V eingestellt werden.

Die Wärmetauscheinrichtung 18 weist dem Verdampfer 181 in Strömungsrichtung nachgelagert einen Kondensator 182 und eine Wasserabscheideeinrichtung 183 auf, die von der Gasströmung S durchströmbar sind bzw. im Betrieb der Strömungsmaschine 10 von der Gasströmung S durchströmt werden. Der Verdampfer 181 kann beispielsweise ein Rohrbündelwärmetauscher und der Kondensator 182 ein Kreuzstrom-Plattenwärmetauscher insbesondere mit versetzten Lamellen sein. Die Wasserabscheideeinrichtung 183 kann beispielsweise als Tropfenabscheider ausgebildet sein, welche die Gasströmung S in Rotation versetzen kann, infolge derer Wassertropfen fliehkraftgetrieben radial nach außen geführt werden und das Wasser gesammelt werden kann. Die verbleibende Gasströmung S kann die Strömungsmaschine 10 über einen Auslass verlassen und insbesondere an die Umgebung abgegeben werden.

Das abgeschiedene Wasser kann beispielsweise über ein optional vorhandenes Wasseraufbereitungssystem 16 in einen Wasserspeicher 17 geführt werden, wo es für eine weitere Verwendung zur Verfügung stehen kann. Mittels einer Zuführeinrichtung 11 kann das Wasser dem Verdampfer 181 bereitgestellt werden, um Wasserdampf zu erzeugen, welcher der Gasströmung S über die Dampfzuführung 19, zugeführt werden kann, um das Wasserdampf-Gasströmungs-Verhältnis in Abhängigkeit eines Betriebsmodus der Strömungsmaschine 10 einzustellen. Hierdurch kann eine Turbineneintrittstemperatur T bzw. eine Temperatur T der Gasströmung S am Turbineneinritt für verschiedene Betriebsmodi beeinflusst werden, insbesondere derart, dass die Turbineneintrittstemperatur T für die jeweiligen verschiedene Betriebsmodi eingestellt, verändert bzw. angepasst werden kann.

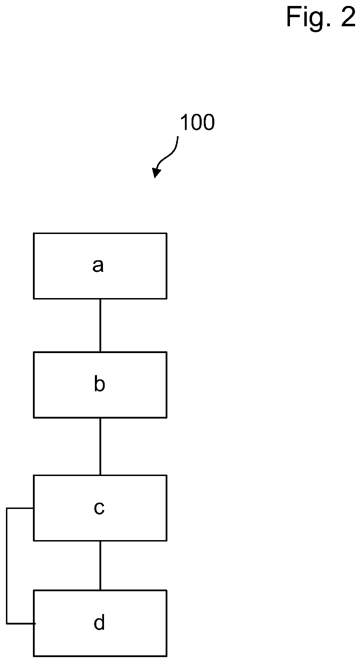

**Fig. 2** zeigt eine schematische Darstellung eines Ablaufdiagramms eines Ausführungsbeispiels eines erfindungsgemäßen Verfahrens 100 zum Betreiben einer Strömungsmaschine 10 für einen Flugantrieb aus Fig. 1.

In einem ersten Schritt a durchströmt eine Gasströmung S in einer Strömungsrichtung 10 einen Verdichter 13, einen Brennraum 14, eine Turbine 15 und eine der Turbine 15 nachgelagerte Wärmetauscheinrichtung 18 der Strömungsmaschine 10. Hierbei kann in einem Schritt b mittels der Wärmetauscheinrichtung 18 Wasser aus der Gasströmung S gewonnen werden. Dieses Wasser kann insbesondere in Form von Wasserdampf in einem Schritt c der Gasströmung S zugeführt werden, wobei sich stromab bzw. am Austritt aus der Brennkammer 14 für die Gasströmung S ein Wasserdampf-Gasströmungs-Verhältnis V ergibt.

In einem Schritt d kann dieses Wasserdampf-Gasströmungs-Verhältnis V in Abhängigkeit eines Betriebsmodus der Strömungsmaschine 10, insbesondere durch Einstellen einer Menge des der Gasströmung S zugeführten Wassers eingestellt werden. Ein Betriebsmodus kann hierbei beispielsweise ein Startmodus, ein Steigflugmodus, ein Reiseflugschubmodus und/ oder ein Reiseflugmodus sein. Als Basis für das Einstellen des Wasserdampf-Gasströmungs-Verhältnis V dient dasjenige Wasserdampf-Gasströmungs-Verhältnis V, welches für einen Reiseflugmodus der Strömungsmaschine 10 vorbestimmt bzw. festgelegt ist.

Hierbei kann das in dem Startmodus angewandte Wasserdampf-Gasströmungs-Verhältnis V 101%-200%, insbesondere 140%-180%, besonders bevorzugt 150%-170% des im Reiseflugmodus angewandten Wasserdampf-Gasströmungs-Verhältnisses sein, das in dem Steigflugmodus angewandte Wasserdampf-Gasströmungs-Verhältnis V 105%-180%, insbesondere 120%-170%, besonders bevorzugt 135%-150% des im Reiseflugmodus angewandten Wasserdampf-Gasströmungs-Verhältnisses V und das in dem Reiseflugschubmodus (maximalen Schub auf Reiseflughöhe) angewandte Wasserdampf-Gasströmungs-Verhältnis V 101%-160%, insbesondere 110%-140%, besonders bevorzugt 115%-130% des im Reiseflugmodus angewandten Wasserdampf-Gasströmungs-Verhältnisses V. Insbesondere kann das bei einem Betrieb im Steigmodus angewandte Wasserdampf-Gasströmungs-Verhältnis V in Abhängigkeit von einer Flughöhe, insbesondere proportional, gegenüber dem Startmodus im Wasserdampf-Gasströmungs-Verhältnis V gesenkt werden.

Schritt d kann bei einem Wechsel des Betriebsmodus der Strömungsmaschine erneut durchgeführt werden, beispielsweise bei einem Wechsel von Startmodus in den Steigflugmodus, sodass das Wasserdampf-Gasströmungs-Verhältnis V entsprechend des aktuellen Betriebsmodus angepasst bzw. erneut eingestellt werden kann. Hierdurch kann für jeden Betriebsmodus, das Wasserdampf-Gasströmungs-Verhältnis insbesondere in Abhängigkeit der von der Strömungsmaschine bereitzustellenden Leistung, eingestellt werden, um eine Turbineneintrittstemperatur in den Betriebsmodi zu regulieren und insbesondere zu senken. Hierdurch kann eine Steigerung des thermischen Wirkungsgrades im Reiseflug erzielt werden, da eine höhere Turbineneintrittstemperatur für den Reiseflugmodus ohne Überschreitung einer zulässigen Höchstturbineneintrittstemperatur in Betriebsmodi mit höherem Leistungsbedarf ermöglicht ist.

### BEZUGSZEICHENLISTE

- 10: Strömungsmaschine
- 11: Zuführeinrichtung
- 12: Fan
- 13: Verdichter
- 14: Brennkammer
- 15: Turbine
- 16: Wasseraufbereitungssystem
- 17: Wasserspeicher
- 18: Wärmetauscheinrichtung
- 19: Dampfzuführung
- 181: Verdampfer
- 182: Kondensator
- 183: Wasserabscheideeinrichtung

- 100: Verfahren
- a bis d: Schritte
- S: Gasströmung
- T: Turbineneintrittstemperatur
- V: Wasserdampf-Gasströmungs-Verhältnis

## Patentansprüche

1. Verfahren (100) zum Betreiben einer Strömungsmaschine (10) für einen Flugantrieb mit von einer Gasströmung (S) in einer Strömungsrichtung durchströmten Verdichter (13), Brennraum (14), Turbine (15) und einer der Turbine (15) nachgelagerten Wärmetauscheinrichtung (18), wobei mittels der Wärmetauscheinrichtung (18) aus der Gasströmung (S) Wasser gewonnen wird, welches zum Verbrennen von Brennstoff im Brennraum (14) zugeführt wird, wobei sich am Austritt aus der Brennkammer (14) für die Gasströmung (S) ein Wasserdampf-Gasströmungs-Verhältnis (V) ergibt, **dadurch gekennzeichnet, dass** das Wasserdampf-Gasströmungs-Verhältnis (V) in Abhängigkeit eines Betriebsmodus der Strömungsmaschine (10) eingestellt wird.

2. Verfahren (100) nach Anspruch 1, wobei ein Betriebsmodus ein Startmodus, ein Steigflugmodus, ein Reiseflugschubmodus und/ oder ein Reiseflugmodus ist.

3. Verfahren (100) nach Anspruch 1 oder 2, wobei das Wasserdampf-Gasströmungs-Verhältnis (V) mittels einer Menge des der Gasströmung (S) zugeführten Wassers eingestellt wird.

4. Verfahren (100) nach einem der vorhergehenden Ansprüche, wobei das Wasser der Gasströmung (S) in Form von Wasserdampf zugeführt wird.

5. Verfahren (100) nach einem der vorhergehenden Ansprüche, wobei das in dem Startmodus angewandte Wasserdampf-Gasströmungs-Verhältnis (V) 101%-200%, insbesondere 140%-180%, besonders bevorzugt 150%-170% des im Reiseflugmodus angewandten Wasserdampf-Gasströmungs-Verhältnisses (V) ist.

6. Verfahren (100) nach einem der vorhergehenden Ansprüche, wobei das in dem Steigflugmodus angewandte Wasserdampf-Gasströmungs-Verhältnis (V) 105%-180%, insbesondere 120%-170%, besonders bevorzugt 135%-150% des im Reiseflugmodus angewandten Wasserdampf- Gasströmungs-Verhältnisses (V) ist.

7. Verfahren (100) nach einem der vorhergehenden Ansprüche, wobei das in dem Reiseflugschubmodus angewandte Wasserdampf-Gasströmungs-Verhältnis (V) 101%-160%, insbesondere 110%-140%, besonders bevorzugt 115%-130% des im Reiseflugmodus angewandten Wasserdampf-Gasströmungs-Verhältnisses (V) ist.

8. Verfahren (100) nach einem der Ansprüche 2 bis 7, wobei das bei einem Betrieb im Steigmodus angewandte Wasserdampf-Gasströmungs-Verhältnis (V) in Abhängigkeit von einer Flughöhe, insbesondere proportional, gegenüber dem Startmodus im Wasserdampf-Gasströmungs-Verhältnis (V) gesenkt wird.

9. Strömungsmaschine (10) für einen Flugantrieb, die zur Verwendung in einem Verfahren (100) nach einem der Ansprüche 1 bis 8 eingerichtet ist.
